# EUROPÄISCHE PATENTSCHRIFT

(11) **EP 2 643 250 B1**
(45) Veröffentlichungstag und Bekanntmachung des Hinweises auf die Patenterteilung: **13.06.2018**
(21) Anmeldenummer: 11774002.7
(22) Anmeldetag: 19.10.2011
(51) Int. Cl.: B65G 47/84

(54) **PET-FLASCHEN-GREIFVORRICHTUNG**
PET BOTTLE GRIPPING DEVICE
DISPOSITIF DE PRÉHENSION POUR BOUTEILLES EN PET

(30) Priorität: 25.11.2010 DE 102010052348
(43) Veröffentlichungstag der Anmeldung: 02.10.2013
(73) Patentinhaber: KHS GmbH, 44143 Dortmund (DE)
(72) Erfinder: FAHLDIECK, Andreas, 55743 Idar-Oberstein (DE)
(86) Internationale Anmeldenummer: PCT/EP2011/005253
(87) Internationale Veröffentlichungsnummer: WO 2012/069109

(56) Entgegenhaltungen:
- EP-A1- 2 159 172
- EP-A1- 2 202 183
- WO-A1-03/078285
- DE-A1- 4 424 077
- DE-A1- 19 536 692
- DE-A1-102008 032 645
- DE-U1- 9 111 159
- DE-U1- 29 712 066
- DE-U1- 29 713 510
- FR-A1- 2 895 384
- JP-A- 2 190 229

## Beschreibung

Die Erfindung richtet sich auf eine Vorrichtung zum Greifen und Halten von PET-Flaschen in Abfüllanlagen zum Transport zwischen Rinser und Füller und/oder innerhalb anderer Anlageteilen der im Oberbegriff des Anspruches 1 angegebenen Gattung.

Derartige Haltevorrichtungen sind In sehr unterschiedlichen Varianten und Ausführungsbeispielen bekannt. So zeigt die DE 10 2008 019 766 B1 eine derartige Vorrichtung, wobei dort in die Nahe der Greiföffnung die Greifarme mittels einer Zugfeder in Schließstellung gehalten werden.

Eine gattungsbildende Haltevorrichtung zeigt das Gebrauchsmuster DE 297 13 510 U1, bei dem bei einer Ausführungsvariante über die Drehachse hinaus verlängerte Teile der Greifarme von einer Druckfeder beaufschlagt sind, um die Schließkraft aufzubringen.

Die EP 2 202 183 A1 zeigt eine Greifvorrichtung gemäß dem Oberbegriff des Anspruchs 1. Bei dieser Greifvorrichtung sind an den Greifelementen Haltefortsätze angeordnet, auf denen eine Druckfeder sicher gehalten ist.

Zeigen die bekannten Lösungen bereits einige Vorteile, so liegt die Aufgabe der Erfindung darin, eine derartige Vorrichtung so weiterzubilden, dass nicht nur die Schließkräfte optimal aufgebracht werden, sondern auch die Greifarme einer Kraft zu ihrer Zentrierung unterworfen werden.

In einer Vorrichtung der eingangs bezeichneten Art wird diese Aufgabe gemäß der Erfindung durch die kennzeichnenden Merkmale des Anspruch 1 gelöst.

Mit der Führung mehrerer Spiralschlingen einer Druckfeder durch die erfindungsgemäßen Aufnahmen wird dann ein zusätzlicher Verstelldruck auf den jeweiligen Greifarm ausgeübt, wenn die Mittelachsen der zylindrischen Aufnahmen einen bestimmten Winkelversatz zueinander einnehmen, da diese als Federdorne dienenden Aufnahmen auch Biegemomente übertragen können und somit die Druckfederachse zu krümmen in der Lage sind bzw, deren Kräfte durch das Rückfedern aufnehmen können. Erfindungsgemäß ist in den Aufnahmen der Druckfeder jeweils mindestens ein Dauermagnet angeordnet. Die Jeweiligen Magnete können zur Unterstützung der Druckfeder dienen oder zur Verringerung der Steigung der Gesamtkraftkennlinie, die aus dem Kraftanteil der Druckfeder und dem Kraftanteil der sich anziehend Magneten gebildet wird. In letzterem Fall können sie wenigstens teilweise auch zur Zentrierung mitwirken,

Eine vorteilhafte Ausgestaltung besteht darin, die Ergänzung dieser Magnete, deren Aufgabe durch die Druckfeder übernommen wird, durch anziehend wirkende Magnete auf der radial äußeren Seite des Drehpunktes. Durch die Kombination abstoßend wirkender Magnete auf der einen Seite und anziehend wirkender Magnete auf der anderen wird ein großer Greif- oder Öffnungsbereich möglich.

Damit ergeben sich im Wesentlichen zwei Zustände.

Der erste Zustand ist dadurch beschrieben, dass die Klammer nahezu geschlossen ist, z.B. bei kleinen Flaschenmündungen, und es wirken hauptsächlich die Magnete nahe der Mündung. Diese sich gegenüber liegenden Magnete wirken anziehend, halten damit die Klammer geschlossen und wirken gleichzeitig auch zentrierend weil sie auch einer "Verschiebung" der beiden Klammern zueinander entgegenwirken.

Der zweite Zustand kann wie folgt beschrieben werden: Die Klammer ist sehr weit geöffnet, z.B. bei großen Flaschenmündungen, und es wirken hauptsächlich radial inneren die Magnete auf der gegenüberliegenden Seite des Drehpunktes.

Durch das Vorsehen der Dauermagnete mit gleichgerichteter Polung in Bezug auf die dem jeweiligen gegenüberliegenden Greifarm zugewandten Seite wird eine Kraft in Schließrichtung der Greifarme aufgebracht, wobei die Ausrichtung so getroffen sein kann, dass der einzelne Dauermagnet an einem Greifarm zwischen die beiden Magnete am anderen Greifarm eintaucht und so gleichzeitig durch die identische Polung eine Zentrierkraft ausgeübt wird.

Eine Ausgestaltung der Erfindung besteht darin, dass die jeweilige Führung der Druckfeder an jedem Greifarm wenigstens ein Drittel der Druckfederlänge beträgt. Zweckmäßig kann vorgesehen sein, dass ein Verlängerungsansatz des einen Greifarmes mit zwei auf Abstand zueinander positionierten Dauermagnet-Aufnahmen und der zugeordnete Verlängerungsansatz des anderen Greifarmes dazu mittig eine Dauermagnetaufnahme aufweisen, wobei die Ausrichtung der Dauermagnete zur Ausübung einer sich abstoßenden Kraft in den Aufnahmen positioniert sind.

In weiterer vorteilhafter Ausgestaltung ist auch vorgesehen, dass die Greifarme in dem jenseits der jeweiligen Schwenkachse liegenden vorderen Bereich mit wenigstens je einer Aufnahme für einen Dauermagneten in gegenüberliegender Stellung ausgerüstet sind, wobei die Dauermagneten zur Ausübung einer Schließkraft zueinander entgegensetzt gepolt sind.

Durch diese Selbstzentrierung kann die Gestaltung der Flaschenklammer im Haltebereich der Flasche konstruktiv vereinfacht werden, da diese nicht mehr die Aufgabe der Zentrierung übernehmen muss.

Eine Ausgestaltung der Flaschenklammer im Haltebereich der Flasche ist, einen möglichst geringen Überstand über die Flaschenmitte hinweg auszuführen, damit der "Triebstockeffekt" minimiert wird. Vorgenannter Effekt entsteht beim Übernehmen und Übergeben einer Flasche und zeigt sich in einer seitlichen Verschiebung der gesamten Klammer oder deren Greifarme. Ist der Triebstockeffekt gering, führt das wiederum zu einem ruhigen Lauf der Anlage weil die Behälterübergaben "weich" erfolgen. Dies Ausführungsform erweist sich bei kleinen Durchmessern von Transportsternen und bei schnell laufenden Anlagen als sehr vorteilhaft.

Eine geeignete Gestaltung der Flaschenklammer im Haltebereich der Flasche führt zu einem großen Bereich der möglichen Mündungs-Durchmesser im Bereich von 23 mm - 46 mm.

Dadurch, dass die Druckfeder bzw. die Magnete vergleichsweise weit von den jeweils zu ergreifenden Flaschen positioniert sind, können mit der gleichen Flaschenklammer unterschiedlich große Flaschen manipuliert werden, so insbesondere auch große Flaschen mit großen Mündungsdurchmessern.

Dadurch, dass die Druckfeder bzw. die Magnete vergleichsweise weit von den jeweils zu ergreifenden Flaschen positioniert sind, können auch große Flaschendurchmesser bzw. Flaschen mit stark ausgeprägten Schultern gehandhabt werden.

Auch sitzt die Druckfeder bzw. die Magnete von den Flaschen weiter weg, so dass nahe der Mündung nur hygienisch leicht zu pflegende Teile vorhanden sind, etwa die im Wesentlichen glatten Bereiche der Greifarme.

Durch die Kombination der Druckfeder mit anziehend wirkenden Dauermagneten kann eine nahezu waagerechte Gesamtfederkennlinie erreicht werden, d.h. gleiche Haltekräfte unabhängig vom Mündungsdurchmesser mit Unterstützung der Zentrierwirkung.

Durch die Zentrierung kann auf einen Anschlag vollständig verzichtet werden, was den Vorteil hat, dass die Flaschenklammern seitlich ausweichen, bleiben aber in Kontakt mit dem Flaschenhals, wodurch die Gefahr des Fallenlassens einer Flasche deutlich geringer wird.

Ein weiterer hygienischer Vorteil besteht darin, dass als Folge der radial innen angeordneten Druckfeder bzw. der Magnete, die Flaschen bzw. Flaschenmündung relativ weit entfernt ist und weiterhin gegebenenfalls an der Flasche anhaftende Flüssigkeit im bestimmungsgemäßen Betrieb weg von der Druckfeder beschleunigt wird. Nahe der Flaschenmündung sind nur leicht zu pflegende Teile angeordnet, was den Gesamtaufbau hygienischer macht.

Weitere Merkmale, Einzelheiten und Vorteile der Erfindung ergeben sich aufgrund der nachfolgenden Beschreibung sowie anhand der Zeichnung. Diese zeigt in:
Fig. 1 eine Aufsicht auf eine erfindungsgemäße Vorrichtung nach einem ersten Ausführungsbeispiel,
Fig. 2 in gleicher Darstellung die Aufsicht auf eine Variante der erfindungsgemäßen Vorrichtung,
Fig. 3 die erfindungsgemäße Vorrichtung im Punkt der Erstberührung mit einem Flaschenhals,
Fig. 3a eine vereinfachte Darstellung der Kraftvektoren zum Schließen und Zentrieren der Greifarme,
Fig. 4 eine vergrößerte Darstellung der asymmetrisch ausgelenkten Greifarme sowie in
Fig. 5 eine räumliche Darstellung einer erfindungsgemäßen Vorrichtung mit Montageelement.

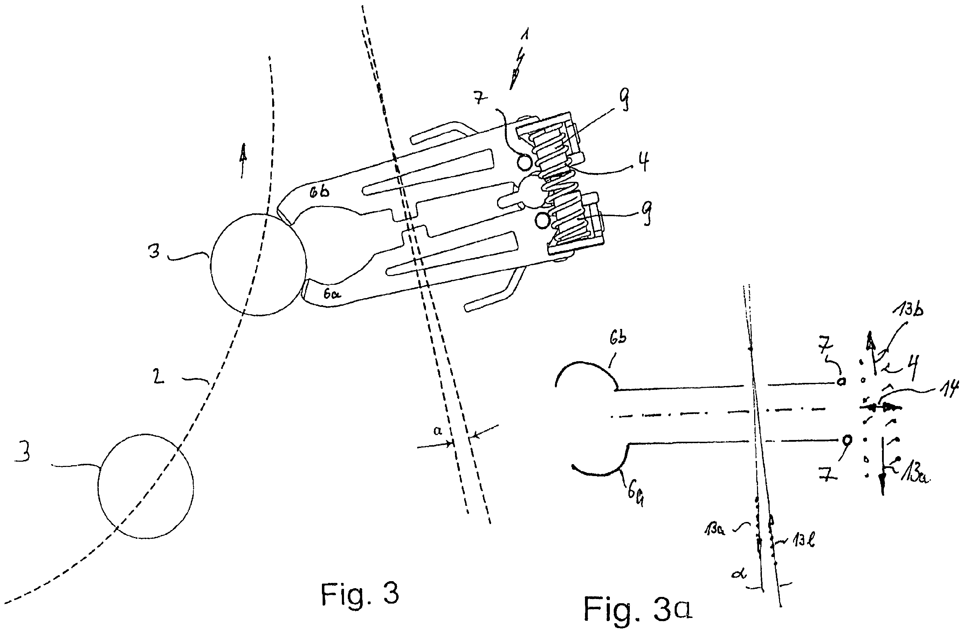

Die allgemein mit 1 bezeichnete Vorrichtung dient zum Greifen und Halten von Flaschen oder Behältern in Abfüllanlagen oder dergl., insbesondere PET-Flaschen, wobei die im Prinzip bekannten Anlageteile in den Figuren nicht näher dargestellt bzw. in Figur 3 durch einen gestrichelten Kreisbogen 2 angedeutet sind. In Figur 3 sind auch die zu ergreifenden Flaschenhälse angedeutet und mit 3 bezeichnet.

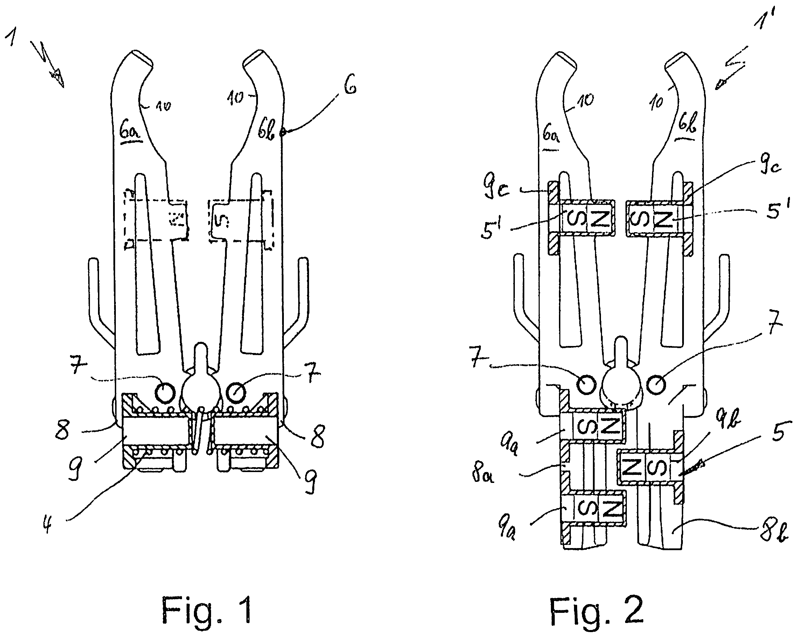

Die Vorrichtung 1 ist mit einem sogenannten passiven Klammersystem ausgerüstet, insbesondere mit schwenkbaren, von einer Druckfeder 4 bzw. Dauermagnet. Dauermagneten, in Figur 2 allgemein mit 5 bezeichnet, an Greifarmen 6, im Folgenden zur Unterscheidung mit 6a und 6b bezeichnet, ausgerüstet.

Wie bekannt, sind diese Greifarme 6 an Schwenkachsen 7 drehbar gelagert und über die Schwenkachsen 7 hinaus mit Verlängerungsansätzen 8 ausgerüstet, an denen zylindrische Aufnahmen 9 vorgesehen sind, die im Beispiel der Figur 1 in das Innere der Druckfeder 4 eingreifen und die Druckfeder 4 im gezeigten Beispiel über ein Drittel führen.

Eine nicht dargestellte Ausführungsvariante besteht darin, dass in den zylindrischen Aufnahmen 9 Dauermagnete angeordnet sind, die insbesondere aufeinander eine Anziehende Magnetkraft ausüben, also gegen die Druckfeder 4 wirken. Hierdurch ist eine vorteilhafte flache Gesamtkennlinie der Kräfte erreichbar. In dieser Ausführungsvariante sind im Bereich der Greifarme 6 keine Dauermagnete angeordnet.

In Figur 2 ist ein abgewandeltes Ausführungsbeispiel dargestellt, hier ist die Vorrichtung, allgemein mit 1' bezeichnet, ebenfalls mit zwei Greifarmen 6a und 6b ausgerüstet, die um Schwenkachsen 7 verschwenkbar sind, wobei dort die Verlängerungsansätze 8 (in Figur 2 mit 8a und 8b bezeichnet) zylindrische Aufnahmen 9a bzw. 9b aufweisen, die Dauermagneten 5 aufnehmen. Der Greifarm 6a ist im dargestellten Beispiel der Figur 2 mit zwei zylindrischen Aufnahmen 9a ausgestattet, während der Verlängerungsansatz 8b lediglich eine mittig zu den beiden anderen positionierte zylindrische Aufnahme 9b aufweist.

Wie in Figur 2 gezeigt, sind diese Aufnahmen so mit Dauermagneten bestückt, dass die gleichen Pole zwischen den von den Verlängerungsansätzen 8a und 8b geschaffenen Raum greifen, durch die gleiche Polung stoßen sich die Magnete gegenseitig ab, so dass eine Schließkraft wie bei der Druckfeder 4 hier erzeugt wird.

In Figur 2 ist noch dargestellt, dass die Greifarme 6a und 6b in ihrem den vorderen Greifbögen 10 zugewandten Bereich mit weiteren zylindrischen Aufnahmen 9c ausgerüstet sein können, in denen Dauermagnete 5' in umgekehrter Polfolge zueinander positioniert sind, derart, dass sie eine Schließkraft auf die Greifarme 6a und 6b ausüben.

Die Figur 3 zeigt den Einlaufbereich eines Flaschenhalses 3 in eine Vorrichtung 1, wobei der in Einlaufrichtung vordere Greifarm 6a eine geringfügig asymmetrische Position gegenüber dem zweiten Greifarm 6b einnimmt, so dass sich eine geringfügige Winkelverstellung, in Figur 3 mit "α" bezeichnet, ergibt.

Durch die ausreichend lange Führung der Druckfeder 4 aufgrund der zylindrischen Aufnahmen 9, die auch als Federdorne bezeichnet werden können, kann der mittlere Bereich der Druckfeder auf die Greifarme 6a bzw. 6b derart wirken, dass sie wieder eine zentrierte Stellung nach Ergreifen des Flaschenhalses 3 einnehmen.

In Figur 3a sind stark vereinfacht die Kraftvektoren in der Ebene der Greifarme dargestellt, die einmal zum Schließen der Greifarme 6a und 6b dienen, insbesondere aber auch zur Zentrierung der übertrieben außermittig dargestellten Greifarme, die um die Schwenkachsen 7 verschwenkbar sind. Der in Schließrichtung des Schwenkarmes 6a gerichtete Vektor aus der Schließkraft der Druckfeder 4 ist in Figur 3a mit 13a bezeichnet, der in Schließrichtung des Greifarmes 6b wirkende Vektor trägt das Bezugszeichen 13b. Die entsprechenden Wirklinien sind außermittig wiedergegeben, ihr nicht fluchtender Anteil ist dabei mit "α" bezeichnet. Die dort reproduzierten Vektoren der Schließkraft sind punktiert wiedergegeben und tragen ebenfalls die Bezugszeichen 13a bzw. 13b. Der Vektor der Biegekraft der Druckfeder 4, der auch die Zentrierung bewirkt, ist als Doppelpfeil in Figur 3a mit 14 bezeichnet. Da diese Kraft aufgrund der zylindrischen Aufnahmen 9a und 9b direkt auf den jeweiligen Greifarm wirken kann, sind diese bestrebt, sich wiederum zu zentrieren, dabei liegt der Vektor der Biegekraft in einer theoretischen Ebene, die durch die Greifer bzw. die Greifarme 6a und 6b aufgespannt ist bzw. räumlich leicht versetzt zu dieser parallel positioniert ist.

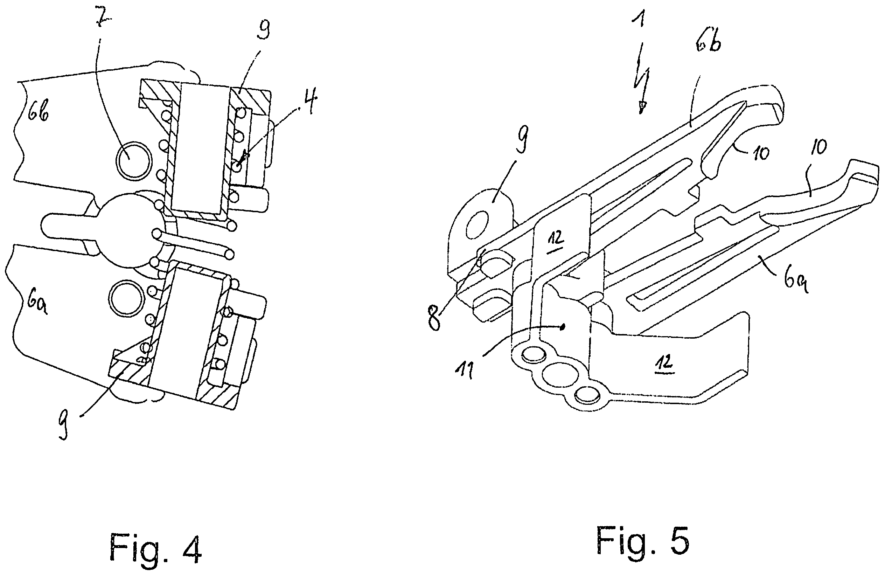

Die exzentrische Position der zylindrischen Aufnahmen 9 an dem jeweiligen Greifarm 6a bzw. 6b ist in Figur 4 vergrößert wiedergegeben.

Schließlich zeigt die Figur 5 noch eine räumliche Darstellung der Vorrichtung 1, die über eine Steckverbindung in den weiteren Maschinenelementen positioniert ist, wobei hier lediglich ein Tragkörper 11 mit angeformten, verformbaren Fixierelementen in Lappenform dargestellt ist.

Natürlich sind die beschriebenen Ausführungsbeispiele noch in vielfacher Hinsicht abzuändern, ohne den Schutzumfang der Ansprüche zu verlassen. So können Kombinationen zwischen die Schließkraft erzeugenden, den Greifbögen 10 zugeordneten Dauermagneten mit einer Druckspiralfeder, wie in Figur 1 angedeutet, vorgesehen sein oder auch eine entsprechende Kombination an den Verlängerungsansätzen 8 der Greifarme 6 aus Feder und Magneten.

### Bezugszeichenliste

- 1: Vorrichtung
- 2: Kreisbogen
- 3: Flaschenhälse
- 4: Druckfeder
- 5: Dauermagnete
- 6, 6a, 6b: Greifarme
- 7: Schwenkachse
- 8, 8a,8b: Verlängerungsansätze
- 9,9a,9b: zylindrische Aufnahmen
- 10: Greifbögen
- 11: Tragbogen
- 12: Fixierelemente
- 13a, 13b: Vektoren
- 14: Doppelpfeil

## Patentansprüche

1. Vorrichtung (1) zum Greifen und Halten von PET-Flaschen (3) in Abfüllanlagen oder dergl, mit einem passiven Klammersystem mit schwenkbaren, von einer Druckfeder (4) und/oder Dauermagneten beaufschlagten Greifarmen, wobei die Vorrichtung eine Druckfeder (4) aufweist, wobei die Greifarme (6) jenseits der jeweiligen Schwenkachse (7) Verlängerungsansätze (8) mit stab- oder schienenförmigen Aufnahmen (9) aufweisen, zur Führung mindestens der Druckfeder (4) und zur Einleitung einer Biegekraft in die Druckfeder (4) oder in Teilsegmente der Druckfeder (4), **dadurch gekennzeichnet, dass** in den Aufnahmen (9) der Druckfeder (4) jeweils mindestens ein Dauermagnet (5) angeordnet ist.

2. Vorrichtung nach Anspruch 1, **dadurch gekennzeichnet, dass** die Dauermagneten (5) mit entgegen gesetzten Polen, also aufeinander anziehend, ausgerichtet sind.

3. Vorrichtung nach einem der vorangehenden Ansprüche, **dadurch gekennzeichnet, dass** die Aufnahme der Druckfeder (4) oder ein beliebiges Federelement an jedem Greifarm (6) wenigstens eine Teillänge, insbesondere mindestens ein Drittel der Druckfederlänge beträgt und so ausgestaltet ist, dass eine Biegekraft eingeleitet werden kann.

4. Vorrichtung nach einem der vorangehenden Ansprüche, **dadurch gekennzeichnet, dass** die Aufnahmen (9) die Druckfeder (4) auf einer Teillänge formschlüssig radial innen ausfüllen oder radial außen umschließen.

5. Vorrichtung nach Anspruch 1, **dadurch gekennzeichnet, dass** ein Verlängerungsansatz (8a) des einen Greifarmes (6a) mit zwei auf Abstand zueinander positionierten Dauermagnet-Aufnahmen (9a) und der zugeordnete Verlängerungsansatz (8b) des anderen Greifarmes (6b) dazu mittig eine Dauermagnetaufnahme (9b) aufweisen, wobei die Ausrichtung der Dauermagnete (5) zur Ausübung einer sich abstoßenden Kraft in den Aufnahmen (9a , 9b) positioniert sind.

6. Vorrichtung nach einem der vorangehenden Ansprüche, **dadurch gekennzeichnet, dass** die Greifarme (6) in dem jenseits der jeweiligen Schwenkachse (7) liegenden vorderen Bereich mit wenigstens je einer Aufnahme (9c) für einen Dauermagneten (5') in gegenüberliegender Stellung ausgerüstet sind, wobei die Dauermagneten (5') zur Ausübung einer Schließkraft zueinander entgegensetzt gepolt sind.

## Claims

1. Device (1) for gripping and retaining PET bottles (3) in filling systems or the like, comprising a passive clamping system having pivotable gripping arms acted on by a spring (4) and/or permanent magnets, wherein the device comprises a compression spring (4), wherein the gripping arms (6) comprise, on the other side of the respective pivot axis (7), extensions (8) having rod-shaped or rail-shaped receptacles (9), for guiding at least the compression springs (4) and for applying a bending force onto the compression springs (4) or onto sub-segments of the pressure springs (4), **characterised in that** arranged in the receptacles (9) of the compression springs (4) in each case is a permanent magnet (5).

2. Device according to claim 1, **characterised in that** the permanent magnets (5) are aligned with opposing poles, i.e. attracting one another.

3. Device according to any one of the preceding claims, **characterised in that** the receptacle of the compression springs (4) or any desired spring element at each gripping arm (6) has at least a part length, in particular at least one third of the compression spring length, and is configured in such a way that a bending force can be initiated.

4. Device according to any one of the preceding claims, **characterised in that** the receptacles (9) surround the compression springs (4) on a part length in positive fit radially inwards or radially outwards.

5. Device according to claim 1, **characterised in that** an extension (8a) of the one gripping arm (6a), with two permanent magnet receptacles (9a) positioned at a distance from one another and the extension (8b) assigned to them of the other gripping arm (6b) comprise in the middle a permanent magnet receptacle (9b), wherein the alignment of the permanent magnets (5) is such that they are positioned in the receptacles (9a, 9b) such as to exert a repelling force on one another.

6. Device according to any one of the preceding claims, **characterised in that** the gripping arms (6) in the front region located on the other side of the pivot axis (7) are provided in each case with at least one receptacle (9c) for a permanent magnet (5') in opposed positions, wherein the permanent magnets (5') are arranged with opposite polarity to one another in order to exert a closing force.

## Revendications

1. Dispositif (1) de préhension et de maintien de bouteilles en PET (3) dans des installations de remplissage ou similaires avec un système passif de fixation par pinces pourvu de bras de préhension pouvant pivoter, soumis à l'action d'un ressort de pression (4) et/ou d'aimants permanents, dans lequel le dispositif présente un ressort de pression (4), dans lequel les bras de préhension (6) présentent du côté de l'axe de pivotement (7) respectif des appendices de prolongement (8) pourvus de logements (9) en forme de barres ou de rails, servant à guider au moins le ressort de pression (4) et servant à introduire une force de flexion dans le ressort de pression (4) ou dans des segments partiels du ressort de pression (4), **caractérisé en ce que** respectivement au moins un aimant permanent (5) est disposé dans les logements (9) du ressort de pression (4).

2. Dispositif selon la revendication 1, **caractérisé en ce que**
les aimants permanents (5) sont orientés par des pôles opposés, donc de manière à s'attirer les uns les autres.

3. Dispositif selon l'une quelconque des revendications précédentes, **caractérisé en ce que** le logement du ressort de pression (4) ou un élément de ressort quelconque présente, au niveau de chaque bras de préhension (6), au moins une longueur partielle, en particulier au moins un tiers de la longueur de ressort de pression et est configuré de telle sorte qu'une force de flexion peut être introduite.

4. Dispositif selon l'une quelconque des revendications précédentes, **caractérisé en ce que** les logements (9) remplissent du côté intérieur radialement par complémentarité de forme le ressort de pression (4) sur une longueur partielle ou les renferment du côté extérieur radialement.

5. Dispositif selon la revendication 1, **caractérisé en ce qu'**un appendice de prolongement (8a) d'un bras de préhension (6a) pourvu de deux logements d'aimant permanent (9a) positionnés à distance l'un par rapport à l'autre et l'appendice de prolongement (8b) associé de l'autre bras de préhension (6b) présentent par rapport à ce dernier de manière centrée un logement d'aimant permanent (9b), dans lequel les aimants permanents (5) sont orientés et positionnés dans les logements (9a, 9b) afin d'exercer une force de répulsion.

6. Dispositif selon l'une quelconque des revendications précédentes, **caractérisé en ce que** les bras de préhension (6) sont équipés, dans la zone avant se trouvant de l'autre côté de l'axe de pivotement (7) respectif, d'au moins respectivement un logement (9c) pour un aimant permanent (5') dans une position opposée, dans lequel les aimants permanents (5') sont de pôle opposé les uns par rapport aux autres afin d'exercer une force de fermeture.
